(19) Europäisches Patentamt / European Patent Office / Office européen des brevets

(11) **EP 4 455 533 A1**

(12) **EUROPEAN PATENT APPLICATION**
published in accordance with Art. 153(4) EPC

(43) Date of publication:
**30.10.2024 Bulletin 2024/44**

(21) Application number: **22911048.1**

(22) Date of filing: **14.12.2022**

(51) International Patent Classification (IPC):
*F16L 59/02* (2006.01)   *H01M 10/613* (2014.01)
*H01M 10/658* (2014.01)   *H01M 50/293* (2021.01)

(52) Cooperative Patent Classification (CPC):
**F16L 59/02; H01M 10/61; H01M 10/613;
H01M 10/625; H01M 10/651; H01M 10/6555;
H01M 10/658; H01M 50/204; H01M 50/242;
H01M 50/289; H01M 50/293;** Y02E 60/10

(86) International application number:
**PCT/JP2022/046112**

(87) International publication number:
**WO 2023/120340 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.12.2021 JP 2021207582**

(71) Applicant: **IBIDEN CO., LTD.
Ogaki-shi, Gifu 503-8604 (JP)**

(72) Inventors:
• **ONAYA, Naoki**
  **Ibi-gun, Gifu 501-0695 (JP)**
• **JIMBO, Naoyuki**
  **Ibi-gun, Gifu 501-0695 (JP)**

(74) Representative: **Hoffmann Eitle
Patent- und Rechtsanwälte PartmbB
Arabellastraße 30
81925 München (DE)**

(54) **HEAT TRANSFER SUPPRESSION SHEET AND BATTERY PACK**

(57)  To provide a heat transfer suppression sheet that can maintain a shape thereof, even when the heat transfer suppression sheet is exposed to a high temperature, to thereby suppress a decrease in heat insulation performance, and a battery pack including the heat transfer suppression sheet. A heat transfer suppression sheet (10) contains: a first organic fiber (1) having no glass transition point at a temperature lower than 120°C; first inorganic particle (2); and a resin binder (9). It is preferable that the first organic fiber (1) has a melting point Tm at a temperature of 200°C or higher, and an elastic modulus of the first organic fiber (1) at Tm°C is 0.1% or more with respect to an elastic modulus of the first organic fiber (1) at 23°C.

FIG.1

EP 4 455 533 A1

**Description**

TECHNICAL FIELD

The present invention relates to a heat transfer suppression sheet and a battery pack including the heat transfer suppression sheet.

BACKGROUND ART

In recent years, from the viewpoint of environmental protection, an electric vehicle or a hybrid vehicle driven by an electric motor has been actively developed. The electric vehicle or the hybrid vehicle is equipped with a battery pack in which a plurality of battery cells are connected in series or in parallel to serve as a power source for a driving electric motor.

In addition, a lithium ion secondary battery, which has higher capacity and is capable of higher output than a lead-acid battery, a nickel-metal hydride battery, or the like, is mainly used for the battery cells. When a battery cell suddenly rises in temperature due to an internal short circuit or overcharging of the battery, and then causes thermal runaway that continues to generate heat, the heat from a battery cell that has experienced thermal runaway may propagate to other adjacent battery cells, thereby causing thermal runaway in other battery cells.

As a method of suppressing the propagation of heat from the battery cell that has experienced thermal runaway as described above, a method of interposing a heat insulation sheet between battery cells is generally used.

For example, Patent Literature 1 discloses a heat insulation sheet for a battery pack, which contains a first particle composed of silica nanoparticle and a second particle composed of a metal oxide, in which the content of the first particle is limited. In addition, Patent Literature 1 discloses that the heat insulation sheet may contain a binder made of at least one selected from a fiber, a binder, and a heat-resistant resin.

CITATION LIST

PATENT LITERATURE

Patent Literature 1: JP2021-34278A

SUMMARY OF INVENTION

TECHNICAL PROBLEM

The heat insulation sheet for a battery pack is required to retain a shape thereof and continue to be present between the battery cells even when the battery cells reach a higher temperature. In particular, in recent battery packs, the capacity of the battery cells has further improved, so that an expansion rate during charging and discharging has increased. Therefore, when a heat insulation sheet is exposed to a high temperature due to an abnormality in a battery cell, the strength of the whole heat insulation sheet cannot be maintained, and the heat insulation performance decreases, which may cause a thermal chain reaction.

Although the heat insulation sheet disclosed in the above Patent Literature 1 maintains an excellent heat insulation property even when a compressive stress increases, further improvements in strength are required.

The present invention has been made in view of the above problems, and an object thereof is to provide a heat transfer suppression sheet that can maintain a shape thereof, even when the heat transfer suppression sheet is exposed to a high temperature, to thereby suppress a decrease in heat insulation performance, and a battery pack including the heat transfer suppression sheet.

SOLUTION TO PROBLEM

The above object of the present invention is achieved by the following configuration [1] relating to a heat transfer suppression sheet.

[1] A heat transfer suppression sheet containing:

a first organic fiber having no glass transition point at a temperature lower than 120°C;
a first inorganic particle; and
a resin binder.

Preferred embodiments of the present invention relating to the heat transfer suppression sheet relate to the following [2] to [16].

[2] The heat transfer suppression sheet according to [1], in which the first organic fiber is at least one of a crystalline organic fiber having a glass transition point of 120°C or higher and an organic fiber having no glass transition point.

[3] The heat transfer suppression sheet according to [1] or [2], in which

the first organic fiber has a melting point Tm at a temperature of 200 or higher, and
an elastic modulus of the first organic fiber at Tm°C is 0.1% or more with respect to an elastic modulus of the first organic fiber at 23°C.

[4] The heat transfer suppression sheet according to any one of [1] to [3], in which the first organic fiber is at least one selected from a polyethylene terephthalate fiber, a polybutylene terephthalate fiber, a polytrimethylene terephthalate fiber, a polyacetal fiber, a polytetrafluoroethylene fiber, a polyetheretherketone fiber, a polyphenylene sulfide fiber, a polyamide fiber, and a polyparaphenylphthalamide fiber.

[5] The heat transfer suppression sheet according to any one of [1] to [4], in which a content of the first organic fiber is 1 mass% or more and 10 mass% or less with respect to a total mass of the heat transfer suppression sheet.

[6] The heat transfer suppression sheet according to any one of [1] to [5], further containing:

a second organic fiber having a glass transition point, in which
in a case where the first organic fiber has a glass transition point, the glass transition point of the second organic fiber is higher than a glass transition point of the resin binder and lower than the glass transition point of the first organic fiber.

[7] The heat transfer suppression sheet according to any one of [1] to [5], further containing:

a second organic fiber having a glass transition point, in which
in a case where the first organic fiber has no glass transition point, the glass transition point of the second organic fiber is higher than a glass transition point of the resin binder.

[8] The heat transfer suppression sheet according to [6] or [7], in which the glass transition point of the second organic fiber is 250°C or lower.

[9] The heat transfer suppression sheet according to any one of [6] to [8], in which the second organic fiber includes at least one selected from a polyvinyl alcohol fiber, a polyethylene fiber, a nylon fiber, a polyurethane fiber, and an ethylene-vinyl alcohol copolymer fiber.

[10] The heat transfer suppression sheet according to any one of [1] to [9], in which the first inorganic particle is a particle composed of at least one kind of inorganic material selected from an oxide particle, a carbide particle, a nitride particle, and an inorganic hydrate particle.

[11] The heat transfer suppression sheet according to any one of [1] to [10], further containing:
a first inorganic fiber and a second inorganic fiber different from each other in at least one property selected from an average fiber diameter, a shape, and a glass transition point.

[12] The heat transfer suppression sheet according to [11], in which

the average fiber diameter of the first inorganic fiber is larger than the average fiber diameter of the second inorganic fiber, and
the first inorganic fiber is linear or acicular, and the second inorganic fiber is dendritic or curly.

[13] The heat transfer suppression sheet according to [11], in which

the first inorganic fiber is an amorphous fiber,
the second inorganic fiber is at least one kind of fiber selected from an amorphous fiber having a glass transition point higher than the glass transition point of the first inorganic fiber and a crystalline fiber, and
the average fiber diameter of the first inorganic fiber is larger than the average fiber diameter of the second inorganic fiber.

[14] The heat transfer suppression sheet according to [11], in which

the first inorganic particle includes at least one kind selected from a nanoparticle, a hollow particle, and a porous particle,

the first inorganic fiber is an amorphous fiber, and

the second inorganic fiber is at least one kind of inorganic fiber selected from an amorphous fiber having a glass transition point higher than the glass transition point of the first inorganic fiber and a crystalline fiber.

[15] The heat transfer suppression sheet according to any one of [1] to [14], further containing:

a second inorganic particle composed of a metal oxide.

[16] The heat transfer suppression sheet according to any one of [1] to [15], in which the resin binder includes at least one selected from a styrene-butadiene resin, an acrylic resin, a silicone-acrylic resin, and a styrene resin.

Further, the above object of the present invention is achieved by the following configuration [17] relating to a battery pack.

[17] A battery pack including:

a plurality of battery cells; and

the heat transfer suppression sheet according to any one of [1] to [16], in which

the plurality of battery cells are connected in series or in parallel.

ADVANTAGEOUS EFFECTS OF INVENTION

According to the heat transfer suppression sheet of the present invention, even when exposed to a high temperature, the heat transfer suppression sheet can retain the shape thereof, and as a result, it is possible to achieve both excellent compression properties and heat transfer suppression effect, and it is possible to suppress a decrease in heat insulation performance.

According to the battery pack of the present invention, since the heat transfer suppression sheet has excellent compression properties and heat transfer suppression effect as described above, thermal runaway of the battery cells in the battery pack can be suppressed.

BRIEF DESCRIPTION OF DRAWINGS

[Fig. 1] Fig. 1 is a schematic diagram showing a structure of a heat transfer suppression sheet according to a first embodiment of the present invention.

[Fig. 2] Fig. 2 is a schematic diagram showing a battery pack according to an embodiment of the present invention.

[Fig. 3] Fig. 3 is a schematic diagram showing a structure of a heat transfer suppression sheet according to a second embodiment of the present invention.

[Fig. 4] (a) to (c) in Fig. 4 are schematic diagrams showing a method for producing a heat transfer suppression sheet according to an embodiment of the present invention in order of steps.

DESCRIPTION OF EMBODIMENTS

The inventors of the present invention have conducted intensive studies on a heat transfer suppression sheet that can solve the above problems.

As a result, it has been found that when a heat transfer suppression sheet contains an inorganic particle, a resin binder, and a first organic fiber having no glass transition point at a temperature lower than 120°C, the heat transfer suppression sheet can retain the shape thereof even when exposed to a high temperature, and as a result, excellent heat insulation performance can be maintained.

First, a structure of a heat transfer suppression sheet according to an embodiment of the present invention will be described in detail with reference to the drawings. Note that, embodiments depicted in the drawings are schematic for clearly describing the present invention and do not necessarily accurately represent actual size or scale.

In addition, the present invention is not limited to the embodiments described below, and can be freely changed and implemented without departing from the gist of the present invention.

[1. Heat Transfer Suppression Sheet]

<1-1. Configuration of Heat Transfer Suppression Sheet>

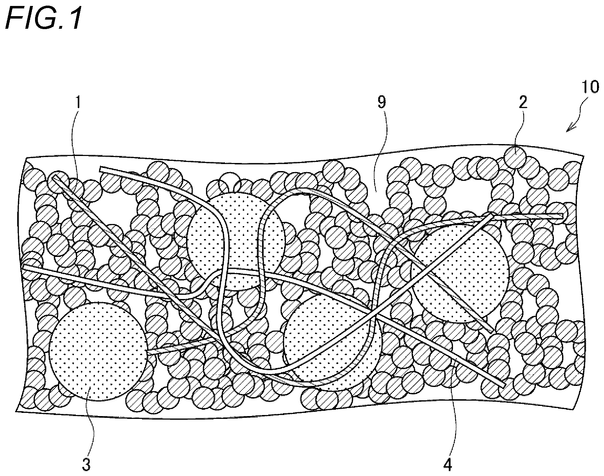

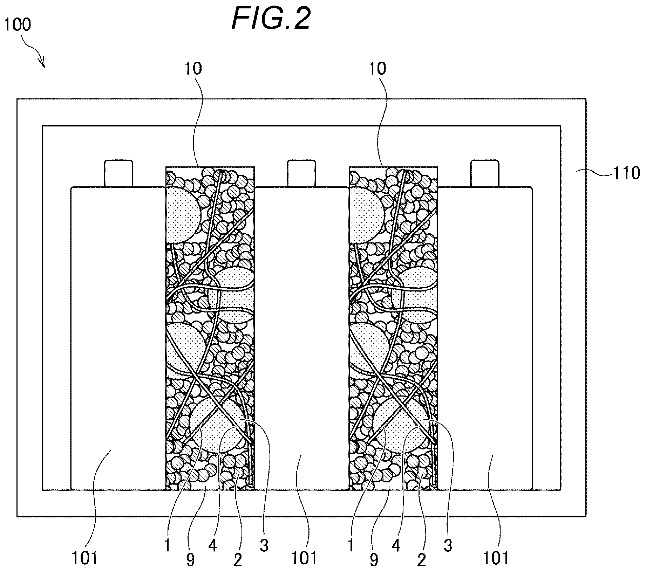

Fig. 1 is a schematic diagram showing a configuration of a heat transfer suppression sheet according to a first embodiment of the present invention. In addition, Fig. 2 is a schematic diagram showing a battery pack according to an embodiment of the present invention.

As shown in Fig. 1, a heat transfer suppression sheet 10 according to the first embodiment includes a first organic fiber 1, a first inorganic particle 2, and a resin binder 9. Although not essential materials in the present invention, a second inorganic particle 3 and a second organic fiber 4 are further contained in the present embodiment. Note that, the first organic fiber 1 is an organic fiber having no glass transition point at a temperature lower than 120°C, and is, for example, a crystalline polyethylene terephthalate (PET) fiber. The second organic fiber 4 is an organic fiber having a glass transition point higher than the glass transition point of the resin binder, and is, for example, a polyvinyl alcohol (PVA) fiber. The first inorganic particle 2 is, for example, a silica nanoparticle, and the second inorganic particle is, for example, titania. The first organic fiber 1, the first inorganic particle 2, the second inorganic particle 3, and the second organic fiber 4 are retained in a sheet shape by the resin binder 9.

A specific example of the use of the heat transfer suppression sheet 10 is one in which the heat transfer suppression sheet 10 is interposed between a plurality of battery cells 101, as shown in Fig. 2. A battery pack 100 is constructed by storing the plurality of battery cells 101 in a battery case 110 in a state where the battery cells 101 are connected in series or in parallel (the connected state is not shown). Note that, the battery cell 101 is, for example, preferably a lithium ion secondary battery, but is not particularly limited thereto, and may be applied to other secondary batteries.

In the heat transfer suppression sheet 10 having such a configuration, the first inorganic particle 2 and the second inorganic particle 3 are both heat-resistant materials, countless minute spaces are formed between the particles, between the particle and the fiber, and between the fibers, and the air also exhibits a heat insulation effect, so that excellent heat transfer suppression performance can be obtained.

In addition, the heat transfer suppression sheet 10 contains the first organic fiber 1 having no glass transition point at a temperature lower than 120°C. The first organic fiber 1 having no glass transition point at a temperature lower than 120°C means that the first organic fiber 1 does not soften in a temperature range from room temperature to lower than 120°C. Even when an abnormality occurs in the battery cell 101 and the temperature reaches a high temperature that the second organic fiber 4 softens, the first organic fiber 1 serves as a framework and can maintain the strength of the heat transfer suppression sheet and support the sheet shape. Therefore, it is possible to suppress a decrease in heat insulation performance due to a reduction in thickness of the heat transfer suppression sheet and a reduction in minute spaces described above.

In addition, when the first organic fiber 1 having no glass transition point at a temperature lower than 120°C is contained, the first organic fiber 1 acts as a framework of the heat transfer suppression sheet even at room temperature. Therefore, flexibility and handleability of the heat transfer suppression sheet can be improved.

In addition, the heat transfer suppression sheet 10 according to the present embodiment also contains the second organic fiber 4 having a glass transition point higher than the glass transition point of the resin binder, and at least a part of the surface of the second organic fiber 4 melts during heating in production steps to be described below. Therefore, by subsequent cooling, the second organic fibers 4 are fused together, and the first organic fiber 1, the first inorganic particle 2, and the second inorganic particle 3 are fused to the second organic fiber 4 to form a three-dimensional framework with even higher strength. Therefore, due to the synergistic effect of the first organic fiber 1 and the second organic fiber 4, it is possible to obtain a heat transfer suppression sheet 10 having extremely an excellent shape retention property.

Further, the heat transfer suppression sheet 10 according to the present embodiment contains the first inorganic particle 2 composed of a silica nanoparticle and the second inorganic particle 3 composed of a metal oxide such as titania. The silica nanoparticle has an excellent heat insulation property that suppresses conductive heat transfer due to a low density thereof, and that suppresses convective heat transfer due to finely dispersed voids. Therefore, the conduction of heat between adjacent silica nanoparticles can be suppressed during normal use of a battery in a normal temperature range.

In addition, the second inorganic particle 3 composed of a metal oxide has a high refractive index and have a high effect of diffusely reflecting light, and can thus suppress radiant heat transfer particularly in a high temperature range with abnormal heat generation or the like. Therefore, when these first inorganic particle 2 and second inorganic particle 3 are contained in the heat transfer suppression sheet 10, an excellent heat insulation property can be obtained in a wide temperature range from the temperature at which the battery is normally used to a high temperature of 500°C or higher

Note that, in the first embodiment described above, an example in which the heat transfer suppression sheet 10 contains the second organic fiber 4 and the second inorganic particle 3 in addition to the first organic fiber 1, the first inorganic particle 2, and the resin binder 9 is shown. However, the present invention is not limited to such a configuration. As described above, it is sufficient that at least one kind of inorganic particle, the above specific organic fiber, and a resin binder are contained, and it is preferable that, for example, two different kinds of inorganic fibers are contained in the heat transfer suppression sheet 10.

As described above, when the heat transfer suppression sheet 10 contains a predetermined organic fiber, it is possible to exhibit the shape retention property even when the heat transfer suppression sheet 10 is exposed to a high temperature. In addition, even when the temperature rises to the point where the organic fiber contained in the heat transfer suppression sheet 10 burns, a part of the organic fiber remains without being completely burned, so that the strength of the heat transfer suppression sheet 10 can be retained by the remaining organic fiber.

Further, as shown below, when the heat transfer suppression sheet 10 contains an inorganic fiber, even when a part of the organic fiber burns, the shape as an inorganic fiber can be retained, so that the high temperature strength of the heat transfer suppression sheet 10 can be further increased. In particular, when two or more kinds of inorganic fibers different from each other in property are contained, the retention property for the inorganic particle can also be improved. An example in which the heat transfer suppression sheet 10 contains a first inorganic fiber and a second inorganic fiber different from each other in property will be described below.

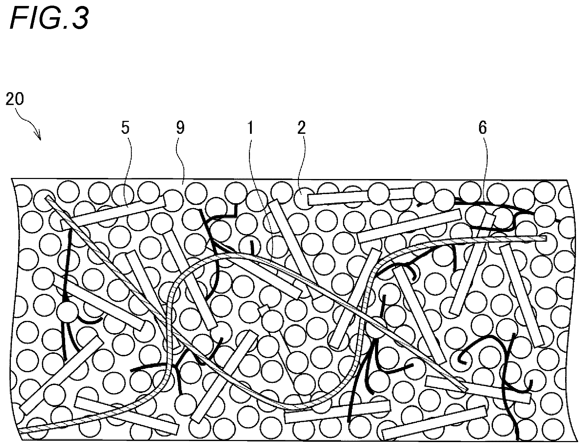

Fig. 3 is a schematic diagram showing a structure of a heat transfer suppression sheet according to a second embodiment of the present invention. In the second embodiment shown in Fig. 3, components that are the same as those in the first embodiment shown in Fig. 1 are denoted by the same reference numerals, and detailed description thereof will be omitted. The heat transfer suppression sheet according to the second embodiment can be used in the battery pack shown in Fig. 2 similar to the first embodiment. Therefore, hereinafter, the effects and the like will be described assuming that a heat transfer suppression sheet 20 according to the second embodiment is interposed between the plurality of battery cells 101.

As shown in Fig. 3, the heat transfer suppression sheet 20 according to the second embodiment contains the first organic fiber 1 and the first inorganic particle 2, and further contains a first inorganic fiber 5 and a second inorganic fiber 6, which are retained by the resin binder 9. The first inorganic fiber 5 and the second inorganic fiber 6 are fibers different from each other in at least one property selected from an average fiber diameter, a shape, and a glass transition point. For example, the average fiber diameter of the first inorganic fiber 5 is larger than the average fiber diameter of the second inorganic fiber 6, the first inorganic fiber 5 is linear or acicular, and the second inorganic fiber 6 is dendritic or curly.

In the second embodiment configured in this way, similar to the first embodiment, since the first organic fiber 1 is contained, even when the temperature of the battery cell 101 rises, the first organic fiber 1 serves as a framework and can support the sheet shape of the heat transfer suppression sheet. In addition, since the heat transfer suppression sheet 20 contains the first inorganic particle 2 composed of a silica nanoparticle, conductive heat transfer and convective heat transfer can be can suppressed, and an excellent heat insulation property can be obtained.

In the heat transfer suppression sheet 20, since the dendritic or curly second inorganic fiber 6 having the small-diameter is present in a state entangled with the first inorganic particle 2 and the large-diameter first inorganic fiber 5, the inorganic particle can be retained well.

Further, since the first inorganic fiber 5 and the second inorganic fiber 6 do not melt even at the temperature during thermal runaway of the battery cell, the heat transfer suppression sheet 20 can maintain the shape thereof and maintain the heat insulation effect even when exposed to a high temperature.

Note that, the property that can be selected as two different kinds of inorganic fibers are not limited to the above. As the first inorganic fiber 5, an amorphous inorganic fiber having an average fiber diameter larger than the average fiber diameter of the second inorganic fiber 6 can be used. In addition, as the second inorganic fiber 6, at least one kind of inorganic fiber selected from a crystalline fiber and an amorphous fiber having a glass transition point higher than that of the first inorganic fiber 5 can be used.

The melting point of the crystalline inorganic fiber is commonly higher than the glass transition point of the amorphous inorganic fiber. Therefore, when the first inorganic fiber 5 is exposed to a high temperature, the surface thereof softens before the second inorganic fiber 6 and binds the first inorganic particle 2, the first organic fiber 1, and the second inorganic fiber 6. Therefore, the mechanical strength of the heat transfer suppression sheet 20 can be improved.

When the second inorganic fiber 6 is composed of a crystalline fiber or has a glass transition point higher than that of the first inorganic fiber 5, even when the first inorganic fiber 5 softens when exposed to a high temperature, the second inorganic fiber 6 does not melt or soften. Therefore, even during thermal runaway of battery cells, it can maintain the shape and continue to be present between the battery cells.

Note that the first inorganic fiber 5 having a large average fiber diameter (large diameter) has an effect of improving the mechanical strength and the shape retention property of the heat transfer suppression sheet 20. When the first inorganic fiber 5 has a large diameter, only the surface can be softened when exposed to a high temperature, and therefore, the effect of binding the first inorganic particle 2, the first organic fiber 1, and the second inorganic fiber 6 can be further improved.

Further, it is also preferable to contain at least one kind selected from a nanoparticle, a hollow particle, and a porous particle as the first inorganic particle 2, and among two different kinds of inorganic fibers, to use an amorphous fiber as the first inorganic fiber 5, and to use at least one kind of inorganic fiber selected from an amorphous fiber having a glass transition point higher than that of the first inorganic fiber as the second inorganic fiber and a crystalline fiber.

<1-2. Thickness of Heat Transfer Suppression Sheet>

The thickness of the heat transfer suppression sheet according to the present embodiment is not particularly limited, and is preferably 0.05 mm or more and 10 mm or less. When the thickness is 0.05 mm or more, sufficient compressive strength can be obtained. On the other hand, when the thickness is 10 mm or less, a good heat insulation property of the heat transfer suppression sheet can be obtained.

[2. Method for Producing Heat Transfer Suppression Sheet]

Next, as an example of a method for producing a heat transfer suppression sheet, a method for producing the heat transfer suppression sheet according to the second embodiment of the present invention and conditions thereof will be described in detail.

<2-1. Method for Producing Heat Transfer Suppression Sheet>

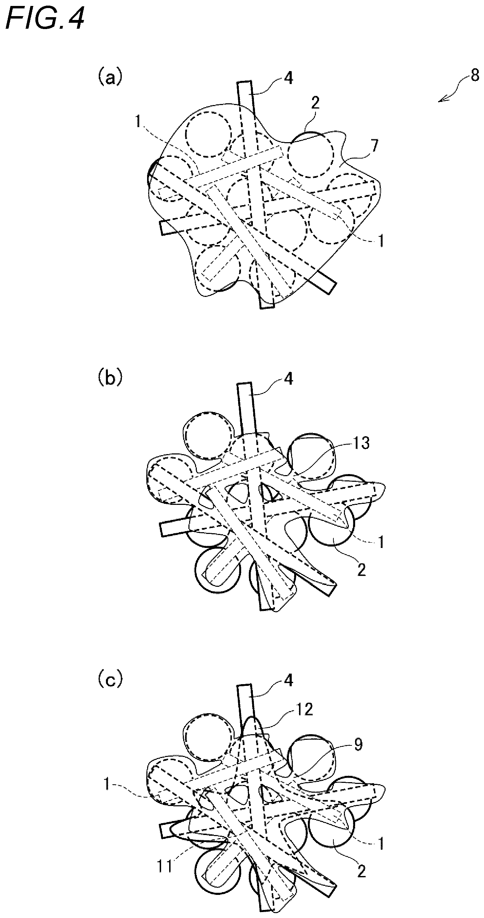

(a) to (c) in Fig. 4 are schematic diagrams each showing a structure of the heat transfer suppression sheet according to the second embodiment of the present invention in order of production steps. Note that, in (a) to (c) in Fig. 4, the second inorganic particle 3 shown in Fig. 1 is omitted.
As shown in (a) in Fig. 4, the first organic fiber 1, the first inorganic particle 2, an emulsion 7 in which a resin binder is dispersed in water, and the second organic fiber 4 having a glass transition point higher than that of the resin binder are prepared, and are mixed and stirred to obtain a dispersion liquid 8. Next, the dispersion liquid 8 is dehydrated (removing the liquid) to prepare a wet sheet.
The wet sheet is then heated. At this time, as shown in (b) in Fig. 4, as the temperature rises, water in the emulsion 7 evaporates and a molten resin binder 13 is obtained. Then, the sheet is further heated, and thereby at least a part of the surface of the second organic fiber 4 is melted.
Thereafter, the sheet is cooled, and thereby the second organic fibers 4 are fused to each other to form a fused portion 12, as shown in (c) in Fig. 4. The sheet is further heated to form a solidified resin binder 9, and the heat transfer suppression sheet according to the present embodiment can be obtained.
Since the emulsion 7 containing a resin binder is used in the heat transfer suppression sheet according to the second embodiment produced by the production method as described above, all the materials are uniformly dispersed, and in the dispersion liquid, the first organic fiber 1 and the second organic fiber 4 are present in irregular directions.
In the process of heating the wet sheet to a predetermined temperature, the resin binder is completely melted, and then a part of the surface of the second organic fiber 4 having a high glass transition point is melted.
In the process of cooling the sheet after heating, the melted surface part of the second organic fiber 4 solidifies first, and the fused portion 12 is formed at a location where the second organic fibers 4 are in contact with each other.
As described above, the first organic fiber 1 and the second organic fiber 4 are present in irregular directions in the dispersion liquid in which the raw materials are mixed. Therefore, when a part of the surface of the second organic fiber 4 is melted and then cooled to a temperature lower than the glass transition point of the second organic fiber 4, at least a part of the second organic fibers 4 are fused together, and a three-dimensional framework 11 is formed. As a result, the obtained framework 11 retains the shape of the entire heat transfer suppression sheet.
Since, due to cooling, the first organic fiber 1, the first inorganic particle 2, and the second inorganic particle (not shown), which are in contact with the surface of the second organic fiber 4, adhere to the surface of the second organic fiber 4, the framework 11 is even stronger.
Thereafter, when the sheet is cooled to a temperature lower than the glass transition point of the resin binder, the melted resin binder solidifies on the surface of the framework 11, and also solidifies between the first organic fibers 1, between the first inorganic particles 2, between the second inorganic particles, and between each fiber and each particle. Accordingly, the first organic fiber 1, the first inorganic particle 2, and the second inorganic particle adhere to the framework 11, and the solidified resin binder 9 further reinforces the framework 11.
By production in this way, the heat transfer suppression sheet according to the present embodiment has a strong framework 11. In the present embodiment, since the first organic fiber 1 having no glass transition point at a temperature of 120°C or lower is present in the heat transfer suppression sheet in irregular directions, even when the second organic fiber 4 softens due to exposure to a high temperature during use of the heat transfer suppression sheet, the shape and the strength can be maintained, and a decrease in heat insulation performance can be suppressed.
Note that, the first organic fiber 1, the first inorganic particle 2, the second inorganic particle (not shown), the emulsion 7 containing a resin binder, and the second organic fiber 4 having a glass transition point higher than that of the resin binder are used as materials in the present embodiment, but the second inorganic particle and the second organic fiber 4 are not necessarily required. For example, as shown in the second embodiment described above, the first inorganic fiber and the second inorganic fiber may be contained, or the second inorganic particle, the second organic fiber 4, the first inorganic fiber, and the second inorganic fiber may all be contained. In addition, the emulsion 7 containing a resin binder does not necessarily have to be in the form of an emulsion. It is sufficient that the resin binder is uniformly dispersed in a liquid by some method, and it is more preferable that all the materials are uniformly dispersed in the dispersion liquid. Therefore, it is sufficient that the first organic fiber 1, the first inorganic particle 2, the second inorganic particle, the resin binder, the second organic fiber 4, and a liquid for preparing a dispersion liquid are mixed for dispersion. Note that, as the liquid for dispersing the resin binder, water is preferably used from the viewpoint of reducing an environmental load.

Next, conditions in the method for producing a heat transfer suppression sheet according to the present embodiment will be described.

<2-2. Heating Temperature for Wet Sheet>

In the step of heating the wet sheet, the heating temperature is set higher than the glass transition point of the second organic fiber 4 by a range of 10°C or more and 50°C or less.

When the heating temperature for the wet sheet is t (°C) and the glass transition point of the second organic fiber 4 is Tg (°C), in a relationship of $t < Tg+10$, melting of the surface of the second organic fiber 4 is insufficient, and the adhesive force between the second organic fibers 4 is weak, making it impossible to form a strong framework.

On the other hand, in a relationship of $t < Tg+50$, only the surface of the second organic fiber 4 is melted by heating, and a shape as a framework can be formed. However, even if $t \geq Tg+50$, the melted second organic fiber 4 is melted on the surface of the first organic fiber 1, and a strong framework can be formed by the first organic fiber 1.

Therefore, the heating temperature t for the wet sheet is set to $Tg+10$ (°C) or higher, and preferably $Tg+15$ (°C) or higher In addition, the heating temperature t for the wet sheet is preferably $Tg+50$ (°C) or lower, and more preferably $Tg+30$ (°C) or lower.

[3. Materials Constituting Heat Transfer Suppression Sheet and Contents Thereof]

Next, the first organic fiber 1, the second organic fiber 4, the first inorganic particle 2, the second inorganic particle 3, the first inorganic fiber 5, the second inorganic fiber 6, and the resin binder 9 constituting the heat transfer suppression sheet according to the first and second embodiments described above will be described in detail below.

<3-1. First Organic Fiber>

As described above, it is preferable that the first organic fiber 1 has no glass transition point at a temperature lower than 120°C, that is, the first organic fiber 1 is preferably at least one of a crystalline organic fiber having a glass transition point of 120°C or higher and an organic fiber having no glass transition point. When such a first organic fiber 1 is contained in the heat transfer suppression sheet, even when an abnormality occurs in the heat transfer suppression sheet, the sheet shape can be retained.

In the case where the mechanical behavior of the organic fiber having no glass transition point is expressed in a graph using the elastic modulus and the strength, when the temperature rises from room temperature to the melting point Tm, it exhibits a behavior in which the elastic modulus gradually decreases and suddenly decreases at the melting point Tm. Specifically, crystals are aligned without any gaps, and are in a crystalline state in which the crystals are difficult to move even when the temperature rises to near the melting point Tm.

Such a state can be expressed by the following expression regarding the elastic modulus.

When the first organic fiber 1 has a melting point Tm at a temperature of 200°C or higher, the proportion of an elastic modulus $G_1$ of the first organic fiber at Tm°C to an elastic modulus $G_0$ of the first organic fiber at 23°C, that is, $(G_1/G_0) \times 100$, is preferably 0.1% or more.

When $(G_1/G_0) \times 100$ is less than 0.1%, in the case where the temperature rises from 23°C, the elastic modulus remarkably decreases before the melting point Tm is reached, and it may be difficult to obtain a sufficient effect of retaining the shape of the heat transfer suppression sheet.

For example, as a result of examining the above elastic modulus proportion for a crystalline polyethylene terephthalate fiber (PET fiber), the elastic modulus $G_0$ at room temperature (23°C) is 50,000 MPa, and the elastic modulus $G_1$ at the melting point Tm (about 230°C) is 200 MPa, so that $(G_1/G_0) \times 100 = 0.4$ (%).

(See "Temperature dependence of elastic modulus of SPS biaxially stretched film", idemitsu.com, SPS biaxially stretched film - Characteristics of film - Temperature dependence of elastic modulus of SPS biaxially stretched film, Idemitsu Kosan Co., Ltd. [online], [Retrieved on December 21, 2021], Internet <URL:https: //www.idemitsu.com/jp/business/ipc/products/sps/oshidashi/nizikuenshin_2.html>)

Specifically, the first organic fiber 1 is preferably at least one selected from a polyethylene terephthalate fiber, a polybutylene terephthalate fiber, a polytrimethylene terephthalate fiber, a polyacetal fiber, a polytetrafluoroethylene fiber, a polyetheretherketone fiber, a polyphenylene sulfide fiber, a polyamide fiber, and a polyparaphenylphthalamide fiber.

(3-1-1. Content of First Organic Fiber)

When the content of the first organic fiber 1 is too small, the effect of retaining the shape of the heat transfer suppression sheet may not be sufficiently obtained. On the other hand, when the content of the first organic fiber 1 is too large, the contents of the first inorganic particle 2 and the resin binder 9, which are other essential components, decrease, making it difficult to obtain the desired heat insulation effect and the effect of retaining the first inorganic particle 2 and the like by the resin binder 9. Therefore, the content of the first organic fiber 1 is preferably 1 mass% or more and 10 mass% or less with respect to the total mass of the heat transfer suppression sheet.

(3-1-2. Average Fiber Length of First Organic Fiber)

The fiber length of the first organic fiber 1 is not particularly limited, and from the viewpoint of ensuring moldability and processability, the average fiber length of the first organic fiber 1 is preferably 10 mm or less.
On the other hand, from the viewpoint of making the first organic fiber 1 function as a framework and ensuring the compressive strength of the heat transfer suppression sheet, the average fiber length of the first organic fiber 1 is preferably 0.5 mm or more.

<3-2. Second Organic Fiber>

As the second organic fiber 4 that can be used in the present embodiment, one having a glass transition point and having a glass transition point higher than the glass transition point of the resin binder 9 can be used. For example, an organic fiber containing at least one selected from a polyvinyl alcohol (PVA) fiber, a polyethylene fiber, a nylon fiber, a polyurethane fiber, and an ethylene-vinyl alcohol copolymer fiber can be used.
Note that, when the first organic fiber 1 has a glass transition point, as the second organic fiber 4 having a glass transition point, one having a glass transition point higher than the glass transition point of the resin binder 9 and lower than the glass transition point of the first organic fiber 1 can be used.
When the first organic fiber 1 has no glass transition point, as the second organic fiber 4 having a glass transition point, one having a glass transition point higher than the glass transition point of the resin binder 9 can be used.
In the production of the heat transfer suppression sheets, since it is difficult to raise the heating temperature higher than 250°C, the glass transition point of the second organic fiber 4 is preferably 250°C or lower, and more preferably 200°C or lower.
The lower limit value of the glass transition point of the second organic fiber 4 is not particularly limited. When the difference from the glass transition point of the resin binder 9 is 10°C or more, the resin binder solidifies after the organic fiber in a semi-molten state completely solidifies in the cooling step during production, so that a sufficient effect of reinforcing the framework by the resin binder 9 can be obtained. Therefore, the difference between the glass transition point of the resin binder 9 and the glass transition point of the second organic fiber 4 is preferably 10°C or more, and more preferably 30°C or more.
On the other hand, when the difference in glass transition point between the second organic fiber 4 and the resin binder 9 is 130°C or less, the time from a time when the second organic fiber 4 completely solidifies to a time when the resin binder begins to solidify can be appropriately adjusted, and the resin binder solidifies while remaining in a well-dispersed state, so that the effect of reinforcing the framework 11 can be further obtained. Therefore, the difference between the glass transition point of the resin binder 9 and the glass transition point of the second organic fiber 4 is preferably 130°C or less, more preferably 120°C or less, still more preferably 100°C or less, even more preferably 80°C or less, and particularly preferably 70°C or less.
In the first embodiment described above, two kinds of organic fibers, i.e., the first organic fiber 1 and the second organic fiber 4, are contained. When the first organic fiber 1 has a glass transition point, the glass transition point of the first organic fiber 1 is preferably 10°C or more, and more preferably 20°C or more higher than the glass transition point of the second organic fiber 4. If necessary, other organic fibers may be further contained.

(3-2-1. Total Content of First Organic Fiber and Second Organic Fiber)

In the present embodiment, when the contents of the first organic fiber 1 and the second organic fiber 4 are appropriately controlled, the organic fibers can sufficiently function as a framework. When the second organic fiber and other organic fibers are contained in addition to the first organic fiber 1, the total content of all organic fibers is preferably 0.5 mass% or more, and more preferably 1 mass% or more with respect to the total mass of the heat transfer suppression sheet. In addition, it is preferably 12 mass% or less, and more preferably 8 mass% or less.

(3-2-2. Average Fiber Length of Second Organic Fiber)

The fiber length of the second organic fiber 4 is also not particularly limited, and from the viewpoint of ensuring moldability and processability, the average fiber length of the second organic fiber 4 is preferably 10 mm or less.
On the other hand, similar to the first organic fiber 1, from the viewpoint of making the second organic fiber 4 function as a framework and ensuring the compressive strength of the heat transfer suppression sheet, the average fiber length of the second organic fiber 4 is preferably 0.5 mm or more.

(3-2-3. Dissolution Temperature in Water of First Organic Fiber and Second Organic Fiber)

Note that, as described above, in the present embodiment, water is preferably used as the liquid for dispersing the resin binder. Therefore, when water is used as the dispersion liquid, it is preferable to use organic fibers with low solubility in water as the first organic fiber and the second organic fiber. In the present embodiment, the dissolution temperature in water is used as an indicator of the solubility in water. That is, the dissolution temperature in water of the first organic fiber and the second organic fiber is preferably 60°C or higher, more preferably 70°C or higher, and still more preferably 80°C or higher.

<3-3. Resin Binder>

As the resin binder 9 that can be used in the present embodiment, one having a glass transition point lower than the glass transition point of the second organic fiber 4 can be used, for example, when the heat transfer suppression sheet 10 contains the second organic fiber 4. For example, a resin binder 9 containing at least one selected from a styrene-butadiene resin, an acrylic resin, a silicone-acrylic resin, and a styrene resin can be used.
The glass transition point of the resin binder 9 is not particularly defined, and is preferably -10°C or higher.
Note that, when the glass transition point of the resin binder 9 is equal to or higher than room temperature, in the case of using the heat transfer suppression sheet containing the resin binder 9 at room temperature, the strength of the heat transfer suppression sheet can be further improved.
Therefore, the glass transition point of the resin binder 9 is, for example, more preferably 20°C or higher, still more preferably 30°C or higher, even more preferably 50°C or higher, and particularly preferably 60°C or higher.

(3-3-1. Content of Resin Binder)

In the present embodiment, when the content of the resin binder 9 is appropriately controlled, the effect of reinforcing the framework by the organic fibers can be sufficiently obtained.
The content of the resin binder 9 is preferably 0.5 mass% or more, and more preferably 1 mass% or more with respect to the total mass of the heat transfer suppression sheet. In addition, it is preferably 20 mass% or less, and more preferably 10 mass% or less.
Note that, in the heat transfer suppression sheet according to the present embodiment, even when the total content of the first organic fiber 1, other organic fibers, and the resin binder 9 is equivalent to the content of organic materials in a heat insulation sheet in the related art, the above structure increases the strength against compression, making it possible to achieve both heat insulation performance and strength.

<3-4. Inorganic Particle>

As the inorganic particle, a single kind of an inorganic particle may be used, or two or more kinds of inorganic particles (the first inorganic particle 2 and the second inorganic particle 3) may be used in combination. From the viewpoint of the heat transfer suppression effect, the first inorganic particle 2 and the second inorganic particle 3 are preferably a particle composed of at least one kind of inorganic material selected from an oxide particle, a carbide particle, a nitride particle, and an inorganic hydrate particle, and more preferably an oxide particle. The forms of the first inorganic particle 2 and the second inorganic particle 3 are not particularly limited. It is preferable to contain at least one kind selected from a nanoparticle, a hollow particle, and a porous particle. Specifically, a silica nanoparticle, a metal oxide particle, an inorganic balloons such as a microporous particle or a hollow silica particle, a particle composed of a thermally expandable inorganic material, a particle composed of a hydrous porous material, or the like can also be used. Hereinafter, the inorganic particle will be described in more detail, with a small-diameter inorganic particle as the first inorganic particle 2 and a large-diameter inorganic particle as the second inorganic particle 3.

Note that, when two or more kinds of inorganic particles having different heat transfer suppression effects are combined, a heating element can be cooled in multiple stages and a heat absorption effect can be exhibited over a wider temperature range. Therefore, in the case of using a nanoparticle as the first inorganic particle 2, it is preferable to contain the second inorganic particle 3, which will be described later, composed of a metal oxide as other inorganic particle.

Next, an example of the kind or the form of particle that can be used as the first inorganic particle 2 will be described in detail below.

<3-4-1. First Inorganic Particle>

(Oxide particle)

An oxide particle has a high refractive index and have a high effect of diffusely reflecting light, so that when an oxide particle is used as the inorganic particle, radiant heat transfer can be suppressed, particularly in a high temperature range with abnormal heat generation or the like. As the oxide particle, at least one kind of particle selected from silica, titania, zirconia, zircon, barium titanate, zinc oxide, and alumina can be used. That is, among the above oxide particle that can be used as the inorganic particle, only one kind or two or more kinds of oxide particle may be used. Particularly, silica is a component having a high heat insulation property, and titania is a component having a high refractive index compared to other metal oxides, and has a high effect of diffusely reflecting light and blocking radiant heat in a high temperature range of 500°C or higher Therefore, silica and titania are most preferably used as the oxide particle.

(Average primary particle diameter of oxide particle: 0.001 $\mu$m or more and 50 $\mu$m or less)

Since the particle diameter of the oxide particle may influence an effect of reflecting radiant heat, when the average primary particle diameter thereof is limited to a predetermined range, an even higher heat insulation property can be obtained.

That is, when the average primary particle diameter of the oxide particle is 0.001 $\mu$m or more, a wavelength thereof is sufficiently larger than a wavelength of light that contributes to heating, and it diffusely reflects the light efficiently. Therefore, in a high temperature range of 500°C or higher, the radiant heat transfer of heat within the heat transfer suppression sheet can be suppressed, and the heat insulation property can be further improved.

On the other hand, when the average primary particle diameter of the oxide particle is 50 $\mu$m or less, even with compression, the number of contact points between the particles does not increase, and it is difficult to form a conductive heat transfer path. Therefore, the influence on the heat insulation property particularly in a normal temperature range where the conductive heat transfer is dominant can be reduced.

Note that in the present invention, the average primary particle diameter can be determined by observing particles with a microscope, comparing the particles with a standard scale, and taking an average of any 10 particles.

(Nanoparticle)

In the present invention, the nanoparticle refer to nanometer-order particle having a spherical or nearly spherical shape and having an average primary particle diameter of less than 1 $\mu$m. The nanoparticle has a low density and thus suppress the conductive heat transfer, and when nanoparticle is used as the inorganic particle, voids are further finely dispersed, so that an excellent heat insulation property of suppressing convective heat transfer can be obtained. Therefore, it is preferable to use the nanoparticle since the conduction of heat between adjacent the nanoparticles can be suppressed during normal use of a battery in a normal temperature range.

Further, when a nanoparticle having a small average primary particle diameter is used as the oxide particle, even when the heat transfer suppression sheet is compressed by expansion due to thermal runaway of the battery cell and the internal density increases, an increase in conductive heat transfer of the heat transfer suppression sheet can be suppressed. This is thought to be because the nanoparticle tends to form fine voids between particles due to a repulsive force caused by static electricity, the bulk density thereof is low, and it is filled with the particle so as to provide a cushioning property.

Note that in the present invention, when the nanoparticle is used as the inorganic particle, the kind thereof is not particularly limited as long as the above definition of nanoparticle is met. For example, since silica nanoparticle is a material having a high heat insulation property and have a few contact points between particles, the amount of heat conducted by the silica nanoparticle is smaller than that in a case of using a silica particle having a large particle diameter. In addition, since generally available silica nanoparticle have a bulk density of about 0.1 (g/cm$^3$), for example, even when battery cells disposed on both sides of the heat transfer suppression sheet thermally expand and a large compressive stress is applied to the heat transfer suppression sheet, the size (area) or the number of contact points between silica nanoparticles does not increase remarkably, and the heat insulation property can be maintained. Therefore, it is preferable to use silica nanoparticle as the nanoparticle. As the silica nanoparticle, wet silica, dry silica, aerogel, or the like can be used.

(Average primary particle diameter of nanoparticle: 1 nm or more and 100 nm or less)

When the average primary particle diameter of the nanoparticle is limited to a predetermined range, an even higher heat insulation property can be obtained.

That is, when the average primary particle diameter of the nanoparticle is 1 nm or more and 100 nm or less, the convective heat transfer and the conductive heat transfer of the heat within the heat transfer suppression sheet can be suppressed particularly in a temperature range of lower than 500°C, and the heat insulation property can be further improved. In addition, even when a compressive stress is applied, voids remaining between the nanoparticles and contact points between many particles can suppress the conductive heat transfer, and the heat insulation property of the heat transfer suppression sheet can be maintained.

Note that the average primary particle diameter of the nanoparticle is more preferably 2 nm or more, and still more preferably 3 nm or more. On the other hand, the average primary particle diameter of the nanoparticle is more preferably 50 nm or less, and still more preferably 10 nm or less.

(Inorganic hydrate particle)

The inorganic hydrate particle exhibits a so-called "heat absorption effect" that the inorganic hydrate particle receives heat from the heating element, thermally decomposes when reaching a thermal decomposition start temperature or higher, releases crystal water thereof, and lowers the temperature of the heating element and surroundings. The inorganic hydrate particle forms a porous material after releasing the crystal water, and exhibits a heat insulation effect due to countless air pores thereof.

Specific examples of the inorganic hydrate include aluminum hydroxide ($Al(OH)_3$), magnesium hydroxide ($Mg(OH)_2$), calcium hydroxide ($Ca(OH)_2$), zinc hydroxide ($Zn(OH)_2$), iron hydroxide ($Fe(OH)_2$), manganese hydroxide ($Mn(OH)_2$), zirconium hydroxide ($Zr(OH)_2$), and gallium hydroxide ($Ga(OH)_3$).

For example, aluminum hydroxide has about 35% crystal water, and as shown in the following formula, thermally decomposes to release the crystal water and exhibits a heat absorption effect. Then, after releasing the crystal water, aluminum hydroxide forms alumina ($Al_2O_3$), which is a porous material, and functions as a heat insulation material.

$$2Al(OH)_3 \rightarrow Al_2O_3 + 3H_2O$$

Note that, as will be described later, the heat transfer suppression sheet 10 according to the present embodiment is preferably interposed between, for example, battery cells, but in a battery cell that has experienced thermal runaway, the temperature rapidly rises to over 200°C and continues to rise to about 700°C. Therefore, it is preferable that the inorganic particle is composed of an inorganic hydrate whose thermal decomposition start temperature is 200°C or higher.

The thermal decomposition start temperature of the above inorganic hydrates is about 200°C for aluminum hydroxide, is about 330°C for magnesium hydroxide, is about 580°C for calcium hydroxide, is about 200°C for zinc hydroxide, is about 350°C for iron hydroxide, is about 300°C for manganese hydroxide, is about 300°C for zirconium hydroxide, and is about 300°C for gallium hydroxide. All of these almost overlap the temperature range of the rapid temperature rise of the battery cell that has experienced thermal runaway, and can effectively prevent the temperature rise. Therefore, these are preferred inorganic hydrates.

(Average secondary particle diameter of inorganic hydrate particle: 0.01 μm or more and 200 μm or less)

In the case where the inorganic hydrate particle is used as the first inorganic particle 2, when the average particle diameter thereof is too large, it takes a certain amount of time for the first inorganic particle 2 (inorganic hydrate) near the center of the heat transfer suppression sheet 10 to reach the thermal decomposition temperature thereof, so that the first inorganic particle 2 near the center of the sheet may not be completely thermally decomposed. Therefore, the average secondary particle diameter of the inorganic hydrate particle is preferably 0.01 μm or more and 200 μm or less, and more preferably 0.05 μm or more and 100 μm or less.

(Particle composed of thermally expandable inorganic material)

Examples of the thermally expandable inorganic material include vermiculite, bentonite, mica, and perlite.

(Particle composed of hydrous porous material)

Specific examples of the hydrous porous material include zeolite, kaolinite, montmorillonite, acid clay, diatomaceous earth, wet silica, dry silica, aerogel, mica, and vermiculite.

(Inorganic balloons)

The heat insulation material used in the present invention may contain an inorganic balloon as the inorganic particle.

When inorganic balloon is contained, the convective heat transfer or the conductive heat transfer of the heat within the heat insulation material can be suppressed in a temperature range of lower than 500°C, and the heat insulation property of the heat insulation material can be further improved.

As the inorganic balloon, at least one kind selected from whitebait balloon, silica balloon, fly ash balloon, barite balloon, and glass balloon can be used.

(Content of inorganic balloons: 60 mass% or less with respect to total mass of heat insulation material)

The content of the inorganic balloon is preferably 60 mass% or less with respect to the total mass of the heat insulation material.

(Average particle diameter of inorganic balloons: 1 $\mu$m or more and 100 $\mu$m or less)

The average particle diameter of the inorganic balloons is preferably 1 $\mu$m or more and 100 $\mu$m or less.

<3-4-2. Second Inorganic Particle>

When the heat transfer suppression sheet contains two kinds of inorganic particles, the second inorganic particle 3 is not particularly limited as long as they are different from the first inorganic particle 2 in kind, particle diameter, or the like. As the second inorganic particle 3, an oxide particle, a carbide particle, a nitride particle, an inorganic hydrate particle, a silica nanoparticle, a metal oxide particle, an inorganic balloons such as a microporous particle or a hollow silica particle, a particle composed of a thermally expandable inorganic material, a particle composed of a hydrous porous material, or the like can be used. Details of these are as described above.

Note that the nanoparticle has extremely low conductive heat transfer, and can maintain an excellent heat insulation property even when a compressive stress is applied to the heat transfer suppression sheet. In addition, a metal oxide particle such as titania has a high effect of blocking radiant heat. Further, when a large-diameter inorganic particle and a small-diameter inorganic particle are used, the small-diameter inorganic particle enters gaps between the large-diameter inorganic particles, resulting in a more dense structure, and the heat transfer suppression effect can be improved. Therefore, when the nanoparticle is used as the first inorganic particle 2, it is preferable that the heat transfer suppression sheet further contains a particle composed of a metal oxide having a diameter larger than that of the first inorganic particle 2 as the second inorganic particle 3.

Examples of the metal oxide include silicon oxide, titanium oxide, aluminum oxide, barium titanate, zinc oxide, zircon, and zirconium oxide. Particularly, titanium oxide (titania) is a component having a high refractive index compared to other metal oxides, and has a high effect of diffusely reflecting light and blocking radiant heat in a high temperature range of 500°C or higher. Therefore, titania is most preferably used.

(Average primary particle diameter of second inorganic particle)

In the case where the second inorganic particle 3 composed of a metal oxide is contained in the heat transfer suppression sheet, when the average primary particle diameter of the second inorganic particle 3 is 1 $\mu$m or more and 50 $\mu$m or less, radiant heat transfer can be efficiently suppressed in a high temperature range of 500°C or higher The average primary particle diameter of the second inorganic particle 3 is more preferably 5 $\mu$m or more and 30 $\mu$m or less, and most preferably 10 $\mu$m or less.

<3-5. First Inorganic Fiber and Second Inorganic Fiber>

It is preferable that the heat transfer suppression sheet according to the present embodiment contains the first inorganic fiber 5 and the second inorganic fiber 6 different from each other in at least one property selected from an average fiber diameter, a shape, and a glass transition point. When two kinds of inorganic fibers having different properties are contained as described in the second embodiment described above, the mechanical strength of the heat transfer suppression sheet and the retention property for the inorganic particle can be improved.

(3-5-1. Two Kinds of Inorganic Fibers Having Different Average Fiber Diameters and Fiber Shapes)

When the heat transfer suppression sheet contains two kinds of inorganic fibers, it is preferable that the average fiber diameter of the first inorganic fiber 5 is larger than the average fiber diameter of the second inorganic fiber 6, the first inorganic fiber 5 is linear or acicular, and the second inorganic fiber 6 is dendritic or curly. The first inorganic fiber 5 having a large average fiber diameter (large diameter) has an effect of improving the mechanical strength and the shape retention property of the heat transfer suppression sheet. The above effect can be obtained by making one of the two kinds of inorganic fibers, for example, the first inorganic fiber 5, larger in diameter than that of the second inorganic fiber 6. Since external impacts may act on the heat transfer suppression sheet, by containing the first inorganic fiber 5 in the heat transfer suppression sheet, the impact resistance can be improved. External impacts include, for example, a pressing force due to expansion of battery cells, or a wind pressure due to ignition of battery cells.

In addition, in order to improve the mechanical strength and the shape retention property of the heat transfer suppression sheet, it is particularly preferable that the first inorganic fiber 5 is linear or acicular. Note that a linear or acicular fiber refers to a fiber having a degree of crimp, which will be described later, of, for example, less than 10%, and preferably 5% or less.

More specifically, in order to improve the mechanical strength and the shape retention property of the heat transfer suppression sheet, the average fiber diameter of the first inorganic fiber 5 is preferably 1 $\mu$m or more, and more preferably 3 $\mu$m or more. When the first inorganic fiber 5 is too thick, the moldability and the processability into a heat transfer suppression sheet may decrease. Therefore, the average fiber diameter of the first inorganic fiber 5 is preferably 20 $\mu$m or less, and more preferably 15 $\mu$m or less.

Note that the fiber length of the first inorganic fiber 5 is preferably 100 mm or less since when it is too long, the moldability and the processability may decrease. Further, when the first inorganic fiber 5 is too short, the shape retention property and the mechanical strength decrease. Therefore, the fiber length thereof is preferably 0.1 mm or more

On the other hand, the second inorganic fiber 6 having a small average fiber diameter (small diameter) has an effect of improving the retention property for the first organic fiber 1 and the first inorganic particle 2, and increasing the flexibility of the heat transfer suppression sheet. Therefore, it is preferable that the second inorganic fiber 6 has a diameter smaller than that of the first inorganic fiber 5.

More specifically, in order to improve the retention property for the first organic fiber 1 and the first inorganic particle 2, it is preferable that the second inorganic fiber 6 is easily deformable and has flexibility. Therefore, the average fiber diameter of the second inorganic fiber 6 having a small diameter is preferably less than 1 $\mu$m, and more preferably 0.1 $\mu$m or less. However, when the small-diameter inorganic fiber is too thin, the small-diameter inorganic fiber is easily broken, and the ability to retain the first organic fiber 1 and the first inorganic particle 2 decreases. In addition, a large proportion of fibers remain entangled in the heat transfer suppression sheet without retaining the first organic fiber 1 and the first inorganic particle 2, and in addition to a decrease in ability to retain the first organic fiber 1 and the first inorganic particle 2, the moldability and the shape retention property also become poor. Therefore, the average fiber diameter of the second inorganic fiber 6 is preferably 1 nm or more, and more preferably 10 nm or more.

Note that the fiber length of the second inorganic fiber 6 is preferably 0.1 mm or less since when the second inorganic fiber 6 is too long, the moldability and the shape retention property decrease. Further, when the second inorganic fiber 6 is too short, the shape retention property and the mechanical strength decrease. Therefore, the fiber length thereof is preferably 1 mm or more.

In addition, the second inorganic fiber 6 is preferably dendritic or curly. Having such a shape, the second inorganic fiber 6 is entangled with the first organic fiber 1 and the first inorganic particle 2 in the heat transfer suppression sheet. Therefore, the ability to retain the first organic fiber 1 and the first inorganic particle 2 is improved. In addition, when the heat transfer suppression sheet is subjected to a pressing force or a wind pressure, the second inorganic fiber 6 is suppressed from slipping and moving, thereby improving the mechanical strength, particularly against an external pressing force or impact.

Note that dendritic refers to a two-dimensionally or three-dimensionally branched structure, for example, feather-like, tetrapod-like, radial, or three-dimensional mesh-like.

When the second inorganic fiber 6 is dendritic, the average fiber diameter can be obtained by measuring the diameters of a trunk and branches at several points using SEM and calculating the average value thereof.

In addition, curly refers to a structure in which the fibers are bent in various directions. As one method of quantifying the curly form, it is known to calculate the degree of crimp from an electron micrograph, which can be calculated according to the following equation, for example.

$$\text{Degree of crimp (\%) = (fiber length - distance between fiber ends)/(fiber length)} \times 100$$

Here, both the fiber length and the distance between fiber ends are measured values on an electron micrograph. That is, the fiber length and the distance between fiber ends are values obtained by projection onto a two-dimensional plane, and are shorter than actual values. Based on this equation, the degree of crimp of the second inorganic fiber 6 is preferably 10% or more, and more preferably 30% or more. When the degree of crimp is small, the ability to retain the first organic fiber 1 and the first inorganic particle 2 decreases, and entanglement (network) between the second inorganic fibers 6 and between the first inorganic fiber 5 and the second inorganic fiber 6 is difficult to form.

In the embodiment described above, as a method of improving the mechanical strength and the shape retention property of the heat transfer suppression sheet, and the retention property for the first organic fiber 1 and the first inorganic particle 2, the first inorganic fiber 5 and the second inorganic fiber 6 having different average fiber diameters and fiber shapes are used. However, the mechanical strength, the shape retention property, and the particle retention property of the heat transfer suppression sheet can also be improved by using the first inorganic fiber 5 and the second inorganic fiber 6 having different glass transition points or average fiber diameters.

As described above, in the present embodiment, in order to improve the mechanical strength, the shape retention property, and the particle retention property of the heat transfer suppression sheet, it is preferable to use various combinations of inorganic fibers. Hereinafter, a combination of the first inorganic fiber and the second inorganic fiber different from the second embodiment shown in Fig. 3 will be described. In the present description, for convenience, other embodiments regarding inorganic fibers will be described using Fig. 3.

(3-5-2. Two Kinds of Inorganic Fibers Having Different Glass Transition Points)

When the heat transfer suppression sheet contains two kinds of inorganic fibers, it is preferable that the first inorganic fiber 5 is an amorphous fiber, the second inorganic fiber 6 is at least one kind of fiber selected from a crystalline fiber and an amorphous fiber having a glass transition point higher than that of the first inorganic fiber 5. In addition, when the first inorganic particle 2 containing at least one kind selected from a nanoparticle, a hollow particle, and a porous particle are used together with the above two kinds of inorganic fibers, the heat insulation performance can be further improved.

The melting point of the crystalline inorganic fiber is commonly higher than the glass transition point of the amorphous inorganic fiber. Therefore, when the first inorganic fiber 5 is exposed to a high temperature, the surface thereof softens before the second inorganic fiber 6 and binds the first organic fiber 1 and the first inorganic particle 2. Therefore, by containing the first inorganic fiber 5 as described above in the heat transfer suppression sheet, the mechanical strength of a heat insulation layer can be improved.

Specifically, as the first inorganic fiber 5, an inorganic fiber having a melting point of lower than 700°C is preferred, and many amorphous inorganic fibers can be used. Among them, a fiber containing $SiO_2$ is preferred, and a glass fiber is more preferred because of being inexpensive, easily available, and having excellent handling properties.

As described above, the second inorganic fiber 6 is composed of at least one kind of fiber selected from a crystalline fiber and an amorphous fiber having a glass transition point higher than that of the first inorganic fiber 5. As the second inorganic fiber 6, many crystalline inorganic fibers can be used.

When the second inorganic fiber 6 is composed of a crystalline fiber or one having a glass transition point higher than that of the first inorganic fiber 5, even when the first inorganic fiber 5 softens when exposed to a high temperature, the second inorganic fiber 6 does not melt or soften. Therefore, even during thermal runaway of battery cells, it can maintain the shape and continue to be present between the battery cells.

In addition, when the second inorganic fiber 6 does not melt or soften, minute spaces are maintained between the particles, between the particle and the fiber, and between the fibers contained in the heat transfer suppression sheet. Therefore, the heat insulation effect due to air can be exhibited and excellent heat transfer suppression performance can be retained.

When the second inorganic fiber 6 is crystalline, as the second inorganic fiber 6, ceramic fibers such as an alumina fiber, an alumina silicate fiber, and a zirconia fiber, a silica fiber, a glass fibers, glass wool, rock wool, a carbon fiber, a basalt fiber, a soluble fiber, a refractory ceramic fiber, an aerogel composite, a magnesium silicate fiber, an alkaline earth silicate fiber, a zirconia fiber, a potassium titanate fiber, and natural mineral fibers such as wollastonite as mineral fibers other than those listed above can be used.

When the second inorganic fiber 6 is one having a melting point of higher than 1000°C among the fibers listed, even when the battery cells experiences thermal runaway, the second inorganic fiber 6 does not melt or soften and can maintain the shape, and can thus be suitably used.

Note that, among the fibers listed as the above second inorganic fiber 6, for example, it is more preferable to use a silica fiber, ceramic fibers such as an alumina fiber and an alumina silicate fiber, and a natural mineral fiber. Among them, it is still more preferable to use one having a melting point of higher than 1000°C.

In addition, even when the second inorganic fiber 6 is amorphous, any fiber having a glass transition point higher than that of the first inorganic fiber 5 can be used. For example, a glass fiber having a glass transition point higher than that of the first inorganic fiber 5 may be used as the second inorganic fiber 6.

Note that, as the second inorganic fiber 6, the various illustrated inorganic fibers may be used alone, or two or more kinds thereof may be used in combination.

Note that, as described above, the first inorganic fiber 5 has a glass transition point lower than that of the second inorganic fiber 6, and when exposed to a high temperature, the first inorganic fiber 5 softens first. Therefore, the first inorganic fiber 5 can bind the first organic fiber 1 and the first inorganic particle 2. However, for example, in the case where the second inorganic fiber 6 is amorphous and has a fiber diameter smaller than the fiber diameter of the first inorganic fiber 5, when the glass transition points of the first inorganic fiber 5 and the second inorganic fiber 6 are close to each other, the second inorganic fiber 6 may soften first.

Therefore, when the second inorganic fiber 6 is an amorphous fiber, the glass transition point of the second inorganic fiber 6 is preferably 100°C or more, and more preferably 300°C or more, higher than the glass transition point of the first inorganic fiber 5.

Note that, the fiber length of the first inorganic fiber 5 is preferably 100 mm or less, and is preferably 0.1 mm or more. The fiber length of the second inorganic fiber 6 is preferably 0.1 mm or less. The reasons are as described above.

(3-5-3. Two Kinds of Inorganic Fibers Having Different Glass Transition Points and Average Fiber Diameters)

When the heat transfer suppression sheet contains two kinds of inorganic fibers, it is preferable that the first inorganic fiber 5 is an amorphous fiber, the second inorganic fiber 6 is at least one kind of fiber selected from a crystalline fiber and an amorphous fiber having a glass transition point higher than that of the first inorganic fiber 5, and the average fiber diameter of the first inorganic fiber 5 is larger than the average fiber diameter of the second inorganic fiber 6.

As described above, when the heat transfer suppression sheet according to the present embodiment contains two kinds of inorganic fibers, it is preferable that the average fiber diameter of the first inorganic fiber 5 is larger than that of the second inorganic fiber 6. In addition, it is preferable that the large-diameter first inorganic fiber 5 is an amorphous fiber, and the small-diameter second inorganic fiber 6 is composed of at least one kind of fiber selected from a crystalline fiber and an amorphous fiber having a glass transition point higher than that of the first inorganic fiber 5. Accordingly, the first inorganic fiber 5 has a low glass transition point and softens early, and thus becomes film-like and hardens as the temperature rises. On the other hand, when the small-diameter second inorganic fiber 6 is composed of at least one kind of fiber selected from a crystalline fiber and an amorphous fiber having a glass transition point higher than that of the first inorganic fiber 5, even when the temperature rises, the small-diameter second inorganic fiber 6 remains in the form of fiber. Therefore, the structure of the heat transfer suppression sheet can be retained and powder falling can be prevented.

Note that even in this case, the fiber length of the first inorganic fiber 5 is preferably 100 mm or less, and preferably 0.1 mm or more. The fiber length of the second inorganic fiber 6 is preferably 0.1 mm or less. The reasons are as described above.

In addition, the heat transfer suppression sheet according to the present embodiment may contain different inorganic fibers in addition to the first inorganic fiber 5 and the second inorganic fiber 6.

(3-5-4. Contents of First Inorganic Fiber and Second Inorganic Fiber)

When the heat transfer suppression sheet contains two kinds of inorganic fibers, the content of the first inorganic fiber 5 is preferably 3 mass% or more and 30 mass% or less with respect to the total mass of the heat transfer suppression sheet, and the content of the second inorganic fiber 6 is preferably 3 mass% or more and 30 mass% or less with respect to the total mass of the heat transfer suppression sheet.

In addition, the content of the first inorganic fiber 5 is more preferably 5 mass% or more and 15 mass% or less with respect to the total mass of the heat transfer suppression sheet, and the content of the second inorganic fiber 6 is more preferably 5 mass% or more and 15 mass% or less with respect to the total mass of the heat transfer suppression sheet. With such contents, the shape retention property, the pressing force resistance, and the wind pressure resistance of the first inorganic fiber 5 and the ability to retain the inorganic particle of the second inorganic fiber 6 are exhibited in a well-balanced manner.

[4. Battery Pack]

Fig. 2 is a schematic diagram showing a battery pack according to an embodiment of the present invention. The battery pack 100 according to the present embodiment includes the plurality of battery cells 101 connected in series or in parallel. In addition, for example, the heat transfer suppression sheet 10 according to the present embodiment is interposed between the battery cells 101. Further, the battery cells 101 and the heat transfer suppression sheet 10 are housed in the battery case 110.

Note that, the heat transfer suppression sheet 10 is as described above.

In this way, when the heat transfer suppression sheet 10 is interposed between the battery cells 101, the heat transfer suppression sheet 10 has the heat transfer suppression effect, and therefore, it is possible to suppress the propagation of heat to battery cells adjacent to a battery cell that has reached a high temperature.

In addition, since the heat transfer suppression sheet 10 according to the present embodiment has high compressive strength, thermal expansion of the battery cells 101 can be suppressed during charging and discharging of the battery cells. Therefore, the distance between the battery cells can be ensured, a decrease in heat insulation performance can be suppressed, and the thermal runaway of the battery cells can be prevented. In addition, since the effect of suppressing thermal expansion can prevent deformation of the battery cells, the load on the battery case 110 can be suppressed.

Note that the battery pack 100 according to the present embodiment is not limited to the battery pack shown in Fig. 2, and the heat transfer suppression sheet 10 can be arranged not only between the battery cells 101 but also between the battery cell 101 and the battery case 110.

In the battery pack 100 configured in this manner, when a certain battery cell ignites, it is possible to suppress the flame from spreading to the outside of the battery case 110.

For example, the battery pack 100 according to the present embodiment is used in an electric vehicle (EV) or the like, and is sometimes disposed under a passenger's floor. In this case, even when the battery cell ignites, the safety of the passenger can be ensured.

In addition, since the heat transfer suppression sheet 10 can be disposed not only between the battery cells but also between the battery cell 101 and the battery case 110, it is not necessary to newly prepare a flame retardant material or the like, and a safe battery pack 100 can be easily formed at a low cost.

In the battery pack according to the present embodiment, the heat transfer suppression sheet 10 disposed between the battery cell 101 and the battery case 110 may be in contact with the battery cell 101 or may have a gap therebetween. However, in the case where there is a gap between the heat transfer suppression sheet 10 and the battery cell 101, even when the temperature of any one battery cell of the plurality of battery cells rises and the volume expands, the deformation of the battery cell is allowable.

Note that the heat transfer suppression sheet 10 according to the present embodiment can be easily bent depending on the kind and the thickness of the material. Therefore, it is not influenced by the shapes of the battery cells 101 and the battery case 110, and can be adapted to any shape. Specifically, it can be applied to cylindrical batteries, flat batteries, and the like, in addition to prismatic batteries.

Although various embodiments have been described above, it is needless to say that the present invention is not limited to such examples. It is apparent to those skilled in the art that various changes and modifications can be conceived within the scope of the claims, and it is understood that such changes and modifications are also encompassed within the technical scope of the present invention. In addition, the constituent elements in the above embodiments may be freely combined without departing from the gist of the present invention.

Note that the present application is based on a Japanese patent application (Japanese Patent Application No. 2021-207582) filed on December 21, 2021, and the contents thereof are incorporated herein by reference.

REFERENCE SIGNS LIST

| 1 | first organic fiber |
| 2 | first inorganic particle |
| 3 | second inorganic particle |
| 4 | second organic fiber |
| 5 | first inorganic fiber |
| 6 | second inorganic fiber |
| 9 | resin binder |
| 11 | framework |
| 10, 20 | heat transfer suppression sheet |
| 100 | battery pack |
| 101 | battery cell |
| 110 | battery case |

**Claims**

1. A heat transfer suppression sheet comprising:

   a first organic fiber having no glass transition point at a temperature lower than 120°C;
   a first inorganic particle; and
   a resin binder

2. The heat transfer suppression sheet according to claim 1, wherein the first organic fiber is at least one of a crystalline organic fiber having a glass transition point of 120°C or higher and an organic fiber having no glass transition point.

3. The heat transfer suppression sheet according to claim 1 or 2, wherein

   the first organic fiber has a melting point Tm at a temperature of 200°C or higher, and
   an elastic modulus of the first organic fiber at Tm°C is 0.1% or more with respect to an elastic modulus of the first organic fiber at 23°C.

4. The heat transfer suppression sheet according to any one of claims 1 to 3, wherein the first organic fiber is at least one selected from a polyethylene terephthalate fiber, a polybutylene terephthalate fiber, a polytrimethylene terephthalate fiber, a polyacetal fiber, a polytetrafluoroethylene fiber, a polyetheretherketone fiber, a polyphenylene sulfide fiber, a polyamide fiber, and a polyparaphenylphthalamide fiber

5. The heat transfer suppression sheet according to any one of claims 1 to 4, wherein a content of the first organic fiber is 1 mass% or more and 10 mass% or less with respect to a total mass of the heat transfer suppression sheet.

6. The heat transfer suppression sheet according to any one of claims 1 to 5, further comprising:

   a second organic fiber having a glass transition point, wherein
   in a case where the first organic fiber has a glass transition point, the glass transition point of the second organic fiber is higher than a glass transition point of the resin binder and lower than the glass transition point of the first organic fiber.

7. The heat transfer suppression sheet according to any one of claims 1 to 5, further comprising:

   a second organic fiber having a glass transition point, wherein
   in a case where the first organic fiber has no glass transition point, the glass transition point of the second organic fiber is higher than a glass transition point of the resin binder.

8. The heat transfer suppression sheet according to claim 6 or 7, wherein the glass transition point of the second organic fiber is 250°C or lower.

9. The heat transfer suppression sheet according to any one of claims 6 to 8, wherein the second organic fiber includes at least one selected from a polyvinyl alcohol fiber, a polyethylene fiber, a nylon fiber, a polyurethane fiber, and an ethylene-vinyl alcohol copolymer fiber.

10. The heat transfer suppression sheet according to any one of claims 1 to 9, wherein the first inorganic particle is a particle composed of at least one kind of inorganic material selected from an oxide particle, a carbide particle, a nitride particle, and an inorganic hydrate particle.

11. The heat transfer suppression sheet according to any one of claims 1 to 10, further comprising:
   a first inorganic fiber and a second inorganic fiber different from each other in at least one property selected from an average fiber diameter, a shape, and a glass transition point.

12. The heat transfer suppression sheet according to claim 11, wherein

   the average fiber diameter of the first inorganic fiber is larger than the average fiber diameter of the second inorganic fiber, and
   the first inorganic fiber is linear or acicular, and the second inorganic fiber is dendritic or curly.

**13.** The heat transfer suppression sheet according to claim 11, wherein

the first inorganic fiber is an amorphous fiber,
the second inorganic fiber is at least one kind of fiber selected from an amorphous fiber having a glass transition point higher than the glass transition point of the first inorganic fiber and a crystalline fiber, and
the average fiber diameter of the first inorganic fiber is larger than the average fiber diameter of the second inorganic fiber.

**14.** The heat transfer suppression sheet according to claim 11, wherein

the first inorganic particle includes at least one kind selected from a nanoparticle, a hollow particle, and a porous particle,
the first inorganic fiber is an amorphous fiber, and
the second inorganic fiber is at least one kind of inorganic fiber selected from an amorphous fiber having a glass transition point higher than the glass transition point of the first inorganic fiber and a crystalline fiber.

**15.** The heat transfer suppression sheet according to any one of claims 1 to 14, further comprising:
a second inorganic particle composed of a metal oxide.

**16.** The heat transfer suppression sheet according to any one of claims 1 to 15, wherein the resin binder includes at least one selected from a styrene-butadiene resin, an acrylic resin, a silicone-acrylic resin, and a styrene resin.

**17.** A battery pack comprising:

a plurality of battery cells; and
the heat transfer suppression sheet according to any one of claims 1 to 16, wherein
the plurality of battery cells is connected in series or in parallel.

*FIG.1*

EP 4 455 533 A1

# FIG.2

FIG.3

# FIG.4

(a)

(b)

(c)

## INTERNATIONAL SEARCH REPORT

| International application No. |
| --- |
| **PCT/JP2022/046112** |

**A. CLASSIFICATION OF SUBJECT MATTER**

*F16L 59/02*(2006.01)i; *H01M 10/613*(2014.01)i; *H01M 10/658*(2014.01)i; *H01M 50/293*(2021.01)i
FI: F16L59/02; H01M50/293; H01M10/613; H01M10/658

According to International Patent Classification (IPC) or to both national classification and IPC

**B. FIELDS SEARCHED**

Minimum documentation searched (classification system followed by classification symbols)

F16L59/02; H01M10/613; H01M10/658; H01M50/293

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | KR 10-2017-0120943 A (LG CHEMICAL LTD) 01 November 2017 (2017-11-01) <br> claims, paragraphs [0001], [0012]-[0089] | 1 |
| Y | | 2-17 |
| Y | JP 2014-179279 A (JAPAN VILENE CO LTD) 25 September 2014 (2014-09-25) <br> claims, paragraphs [0008]-[0071] | 2-17 |
| Y | JP 2013-535582 A (3M INNOVATIVE PROPERTIES COMPANY) 12 September 2013 (2013-09-12) <br> claims, paragraphs [0018]-[0019], fig. 1-7 | 2-17 |
| Y | US 2020/0399461 A1 (HEXION INC.) 24 December 2020 (2020-12-24) <br> paragraphs [0055], [0062]-[0107] | 3-17 |
| Y | WO 2013/129541 A1 (OJI HOLDINGS CORPORATION) 06 September 2013 (2013-09-06) <br> claims, paragraphs [0001], [0041]-[0165] | 8-17 |
| Y | JP 2021-034278 A (IBIDEN CO LTD) 01 March 2021 (2021-03-01) <br> claims, paragraphs [0017]-[0069], fig. 1-4 | 11-14, 17 |

☑ Further documents are listed in the continuation of Box C.      ☑ See patent family annex.

| | | | |
| --- | --- | --- | --- |
| \* | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **17 February 2023** | **28 February 2023** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**

International application No.

**PCT/JP2022/046112**

| C. | DOCUMENTS CONSIDERED TO BE RELEVANT | |
|---|---|---|
| Category* | Citation of document, with indication, where appropriate, of the relevant passages | Relevant to claim No. |
| Y | JP 2017-166759 A (IBIDEN CO LTD) 21 September 2017 (2017-09-21)<br>claims, paragraphs [0036]-[0120], fig. 1-3 | 11-14, 17 |

**INTERNATIONAL SEARCH REPORT**
Information on patent family members

International application No.

**PCT/JP2022/046112**

| Patent document cited in search report | | | Publication date (day/month/year) | Patent family member(s) | | | Publication date (day/month/year) |
|---|---|---|---|---|---|---|---|
| KR | 10-2017-0120943 | A | 01 November 2017 | (Family: none) | | | |
| JP | 2014-179279 | A | 25 September 2014 | (Family: none) | | | |
| JP | 2013-535582 | A | 12 September 2013 | US | 2013/0101805 | A1 | |
| | | | | claims, paragraphs [0026]-[0369], fig. 1-7 | | | |
| | | | | WO | 2012/006300 | A1 | |
| | | | | CN | 103069065 | A | |
| | | | | KR | 10-2013-0091734 | A | |
| US | 2020/0399461 | A1 | 24 December 2020 | EP | 3986952 | A1 | |
| | | | | CN | 114008103 | A | |
| | | | | KR | 10-2022-0024483 | A | |
| WO | 2013/129541 | A1 | 06 September 2013 | TW | 201343407 | A | |
| JP | 2021-034278 | A | 01 March 2021 | US | 2022/0200080 | A1 | |
| | | | | claims, paragraphs [0021]-[0120], fig. 1-4 | | | |
| | | | | WO | 2021/039844 | A1 | |
| | | | | EP | 3835262 | A1 | |
| | | | | KR | 10-2021-0034671 | A | |
| | | | | CN | 112714978 | A | |
| JP | 2017-166759 | A | 21 September 2017 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021034278 A

- JP 2021207582 A

**Non-patent literature cited in the description**

- Temperature dependence of elastic modulus of SPS biaxially stretched film. SPS biaxially stretched film - Characteristics of film - Temperature dependence of elastic modulus of SPS biaxially stretched film. Idemitsu Kosan Co., Ltd, 21 December 2021